# FASCICULE DE BREVET EUROPEEN

(11) **EP 2 490 877 B1**
(45) Date de publication et mention de la délivrance du brevet: **13.11.2013**
(21) Numéro de dépôt: 10787828.2
(22) Date de dépôt: 22.10.2010
(51) Int. Cl.: B29C 37/00, B29C 59/02

(54) **PROCEDE ET MACHINE DE MICRO-THERMOFORMAGE POUR REALISER DES MICROSTRUCTURES SUR UNE PIECE**
MIKROWÄRMEFORMUNGSVERFAHREN UND MASCHINE ZUR FORMUNG VON MIKROSTRUKTUREN AUF EINEM TEIL
MICRO-THERMOFORMING METHOD AND MACHINE FOR FORMING MICROSTRUCTURES ON A PART

(30) Priorité: 22.10.2009 FR 0957412
(43) Date de publication de la demande: 29.08.2012
(73) Titulaire: Université Claude Bernard Lyon I, 69622 Villeurbanne Cedex (FR); Centre National de la Recherche Scientifique, 75794 Paris Cedex 16 (FR); Institut National Des Sciences Appliquees De Lyon, 69621 Villeurbanne (FR); Ecole Centrale de Lyon, 69134 Ecully Cedex (FR)
(72) Inventeur: MORIN, Pierre, F-69300 Caluire (FR)
(74) Mandataire: Thibault, Jean-Marc
(86) Numéro de dépôt international: PCT/FR2010/052259
(87) Numéro de publication internationale: WO 2011/048341

(56) Documents cités:
- FR-A- 1 553 623
- US-A- 6 042 761
- US-A1- 2008 157 438

## Description

La présente invention concerne le domaine technique du micro-thermoformage de pièces relevant de la micro-technologie et elle vise plus précisément un procédé et une machine permettant de réaliser par thermoformage, des microstructures, au sens général, sur une face d'une pièce.

L'objet de l'invention trouve une application particulièrement avantageuse mais non exclusivement dans le domaine de la fabrication des microsystèmes au sens général tel que par exemple les microsystèmes microfluidiques.

L'objet de l'invention trouve des applications également dans le domaine du traitement des surfaces pour par exemple des applications optiques.

Dans le domaine technique du micro-thermoformage, il est connu de façonner une pièce en polymère afin de réaliser des motifs, en creux ou en relief ou d'une manière générale des microstructures à l'échelle micrométrique ou nanométrique. Une telle pièce est obtenue classiquement à l'aide d'une matrice microstructurée comportant des empreintes pour réaliser par thermoformage, les microstructures sur la pièce. A cet effet, cette matrice microstructurée fait partie d'un moule dans lequel est placée une plaquette par exemple en polymère. L'application d'un effort de compression sur la plaquette, combinée au chauffage de la plaquette permettent la réalisation d'une pièce thermoformée portant sur une face, les microstructures souhaitées. Avant démoulage, la pièce thermoformée et microstructurée est refroidie.

Cette technique de micro-thermoformage présente des inconvénients car il apparaît difficile, voire impossible, de remplir par le matériau certaines zones de tailles réduites. Par ailleurs, il n'apparaît pas possible d'obtenir certaines formes de microstructures car les efforts latéraux exercés sur les empreintes de la matrice microstructurée peuvent les déformer ou les détruire. De plus, lors du refroidissement des pièces avant démoulage, le retrait de la matière exerce également des contraintes latérales sur les empreintes pouvant conduire à leur déformation ou leur destruction.

Pour tenter de remédier à ces inconvénients, il a été proposé d'augmenter l'effort de pression pour un meilleur remplissage des empreintes de la matrice, par la matière. Cette solution présente l'inconvénient d'augmenter le risque de déformation des empreintes de la matrice microstructurée.

Pour améliorer la tenue des empreintes de la matrice microstructurée, il a été proposé de réaliser la matrice microstructurée par des matériaux plus durs, ce qui conduit toutefois à un usinage plus difficile et à un coût de fabrication plus élevé.

Par ailleurs, dans le domaine de la fabrication de cartes en matière plastique, le brevet US-A-6 042 761 propose de réaliser une opération de thermoformage visant à s'affranchir des problèmes de retrait de la matière plastique. Cette opération de thermoformage vise à réaliser des empreintes creuses pour déplacer la matière plastique. Si un tel document vise à s'affranchir des effets de retrait de la matière plastique, une telle solution ne donne pas satisfaction pour réaliser par thermoformage des microstructures, en raison des efforts latéraux exercés par le déplacement de matière, sur les empreintes d'une matrice microstructurée.

De même, la demande de brevet US 2008/0157438 décrit une méthode de réalisation de motifs sur un substrat à l'aide d'un moule à empreintes creuses ou en reliefs selon le préambule de la revendication 1 ainsi qu'une machine selon le préambule de la revendication 6. Ce document n'apporte pas une solution au problème de la déformation ou de la destruction des empreintes de la matrice susceptible d'intervenir en raison des efforts latéraux exercés par la matière sur ces empreintes lors de l'opération de formage.

L'objet de l'invention vise donc à remédier aux inconvénients de l'art antérieur en proposant un procédé de micro-thermoformage adapté pour réaliser sur une grande surface d'une pièce, des microstructures à l'échelle micro ou nanométrique, avec des formes diversifiées.

Un autre objet de l'invention vise à proposer un procédé de micro-formage permettant de s'affranchir des effets de retrait de la matrice de la pièce mais également de contrer les efforts latéraux exercés par le déplacement de matière, sur les empreintes de la matrice microstructurée.

Pour atteindre un tel objectif, l'objet de l'invention concerne un procédé de micro-thermoformage pour réaliser des microstructures sur la face de formage d'une pièce, à l'aide d'un moule comportant une matrice microstructurée.

Selon l'invention, le procédé comprend les étapes suivantes :
- une première étape de thermoformage de la pièce placée dans le moule, réalisée à l'aide d'une matrice de préformage ne réalisant pas les microstructures mais assurant la formation sur la face de formage, d'au moins une nervure périphérique d'anti-retrait,
- une étape de remplacement de la matrice de préformage par la matrice microstructurée avec maintien de la pièce dans le moule, cette matrice microstructurée étant adaptée pour conserver la nervure d'anti-retrait lors de l'opération de thermoformage,
- une deuxième étape de thermoformage de la pièce maintenue dans le moule avec la matrice microstructurée pour obtenir la pièce avec les microstructures et la nervure d'anti-retrait.

Le procédé selon l'invention comporte en outre l'une et/ou l'autre des caractéristiques suivantes :
- réaliser la nervure périphérique d'anti-retrait afin d'être en appui contre le moule,
- réaliser la nervure périphérique d'anti-retrait avec une hauteur supérieure à la hauteur des microstructures,
- retirer la matrice microstructurée avant l'enlèvement de la pièce du moule,
- refroidir la pièce avant l'enlèvement des matrices.

Un autre objet de l'invention est de proposer une machine de micro-thermoformage permettant la mise en oeuvre du procédé conforme à l'invention.

La machine de micro-thermoformage pour la mise en oeuvre du procédé vise à réaliser des microstructures sur la face de thermoformage d'une pièce comportant :
- un bâti porteur d'un moule de réception d'une pièce thermoformable,
- un module de chauffage de la pièce,
- un système d'application d'un effort de compression sur le moule comportant :
   ■ une matrice de préformage dépourvue desdites microstructures mais pourvue d'au moins une rainure périphérique pour former une nervure périphérique d'anti-retrait sur la pièce,
   ■ une matrice microstructurée pour réaliser les microstructures et comportant une rainure périphérique identique à la rainure périphérique,
   ■ un dispositif de remplacement d'une matrice par une autre matrice,
   ■ un système assurant, lors de l'opération de remplacement de la matrice de préformage, le maintien de la pièce dans le moule et le contact avec la nervure périphérique de la pièce.

La machine selon l'invention comporte en outre l'une et/ou l'autre des caractéristiques suivantes :
- un dispositif de maintien comportant une plaque de fermeture du moule, montée mobile et déplacée par un organe de déplacement, cette plaque de fermeture recevant alternativement la matrice de préformage et la matrice microstructurée,
- un système de maintien de la pièce comportant un anneau de maintien présentant un rebord saillant sur lequel s'appuie la pièce et contre lequel la rainure d'anti-retrait est en contact.

Diverses autres caractéristiques ressortent de la description faite ci-dessous en référence aux dessins annexés qui montrent, à titre d'exemples non limitatifs, des formes de réalisation de l'objet de l'invention.
Les **Figures 1** à **8** illustrent le procédé de micro-thermoformage conforme à l'invention selon différentes étapes caractéristiques.
La **Figure 9** est une vue schématique d'un exemple de réalisation d'une machine de micro-thermoformage conforme à l'invention.
Les **Figures 10** à **14** sont des vues illustrant la machine de micro-thermoformage dans des positions caractéristiques de mise en oeuvre du procédé conforme à l'invention.

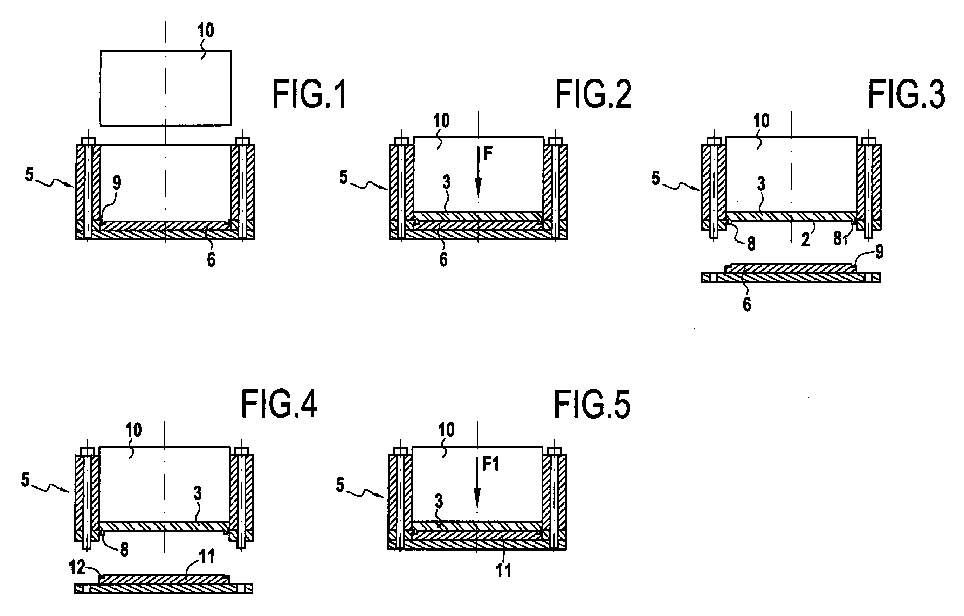

Tel que cela ressort plus précisément des **Fig. 1** à **8****,** l'objet de l'invention concerne un procédé de micro-thermoformage permettant de réaliser des microstructures **1** sur une face **2** d'une pièce thermoformée **3.** Les microstructures **1** correspondent à des motifs en creux ou en saillie de formes diverses et réalisées à l'échelle micrométrique ou nanométrique.

De manière classique, cette pièce thermoformée **3** est réalisée en tout matériau thermoformable. Par exemple, la pièce **3** est une pièce en un matériau thermoplastique tel qu'un polymère thermoplastique. Bien entendu, la pièce **3** peut être réalisée en un matériau thermoformable différent tel que par exemple en métal, en verre ou en céramique.

Le procédé selon l'invention met en oeuvre un moule **5** dans lequel est placé en tant que pièce **3,** un matériau thermoformable **(****Fig. 2****)** se présentant sous la forme par exemple d'une plaquette qui après thermoformage permettra d'obtenir la pièce **3** avec les microstructures **1** définitives souhaitées.

Conformément à l'invention, le procédé de micro-thermoformage consiste à réaliser une première étape de thermoformage à l'aide d'une matrice de préformage **6** ne réalisant pas les microstructures **1** mais assurant la formation d'au moins un épaulement, une saillie ou d'une manière générale, une nervure périphérique d'anti-retrait **8** sur la face de thermoformage **2.** Tel que cela apparaît plus précisément aux **Fig. 1** à **3****,** cette matrice de préformage **6** comporte au moins une rainure périphérique **9** destinée à réaliser la nervure d'anti-retrait **8** correspondante sur la face de thermoformage **2** de la pièce.

Selon un exemple préféré de réalisation, cette matrice de préformage **6** est complètement lisse à l'exception de la rainure périphérique **9.** En d'autres termes, la matrice de préformage **6** ne comporte pas les empreintes assurant la formation des microstructures **1** que doit présenter la pièce **3** en fin de processus de thermoformage. Il est à noter que selon une variante de réalisation, il peut être prévu de réaliser sur la pièce **3,** lors de cette première étape de thermoformage, des microstructures correspondant à des préformes par rapport aux microstructures **1** réalisées au terme du procédé de thermoformage.

Lors de cette étape de thermoformage, la plaquette **3** est formée par thermo-compression c'est-à-dire par application par un organe **10** tel qu'un vérin, d'un effort de compression **F** combiné au chauffage du matériau pour obtenir une pièce **3** thermo compressée pourvue sur sa face de thermoformage **2,** de la nervure périphérique d'anti-retrait **8 (****Fig. 3****).**

Il est à noter que lors de l'application de la force de compression **F** dans la direction perpendiculaire à la face **2** à structurer, il apparaît un déplacement de matière dans une direction parallèle à cette face **2** et vers l'extérieur de la pièce compte tenu de la nature élastique de la pièce **3.** Un tel déplacement latéral de matière est limité par la présence du moule **5** dans lequel est placée la pièce **3.** Ainsi la pièce **3** est en butée contre le moule **5.**

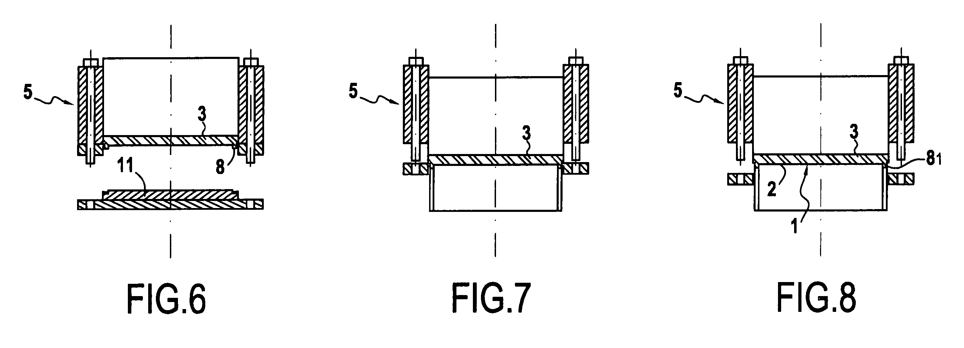

Selon une variante préférée de réalisation, il est à noter que la nervure d'anti-retrait **8** présente un bord externe **8₁ (****Fig. 8****)** qui est avantageusement en butée sur le moule **5** contribuant également à limiter l'extension radiale de la matière de la pièce **3.**

De manière classique, la pièce **3** est refroidie avant la poursuite du procédé de micro-thermoformage selon l'invention qui comporte ensuite une étape de remplacement de la matrice de préformage **6** par une matrice microstructurée **11 (****Fig. 3, 4****).** La pièce **3** est maintenue dans le moule **5** durant la suite du procédé et en particulier lors du remplacement de la matrice de préformage **6** par la matrice microstructurée **11.** Il est à noter qu'après la suppression de la force de compression **F** et l'enlèvement de la matrice de préformage **6,** il apparaît une rétraction c'est-à-dire un déplacement de matière dans une direction parallèle à cette face **2** et vers l'intérieur de la pièce **3.** Avantageusement, la nervure d'anti-retrait **8** permet de maintenir en extension la matière de la pièce au niveau de la face **2.**

La matrice microstructurée **11** présente toutes les empreintes nécessaires pour réaliser les microstructures **1** sur la pièce **3.** Bien entendu, la matrice microstructurée **11** comporte également une rainure périphérique **12** identique à la rainure périphérique **9** aménagée sur la matrice de préformage **6** afin de conserver la présence de la nervure d'anti-retrait **8.**

Le procédé selon l'invention consiste ensuite à réaliser une deuxième étape de thermoformage avec la matrice microstructurée **11 (****Fig. 5****)** en vue d'obtenir la pièce **3** pourvue sur sa face de formage **2,** des microstructures **1** et de la nervure d'anti-retrait **8.** Cette étape de thermoformage consiste à appliquer sur la pièce **3** maintenue dans le moule **5,** une force de compression **F₁** combinée à un chauffage pour assurer la réalisation par thermoformage des microstructures **1** et de la nervure anti-retrait **8.** Avant l'enlèvement de la matrice microstructurée **11**, la pièce **3** est refroidie **(****Fig. 6****).** La matrice microstructurée **11** est enlevée pour permettre le retrait de la pièce **3** du moule **5 (****Fig. 7 - 8****).**

Le procédé décrit ci-dessus permet de minimiser les efforts latéraux sur les empreintes de la matrice microstructurée **11** pour les raisons suivantes. Lors de la première étape de thermoformage, il se produit, comme explicité ci-dessus, un déplacement important de matière qui ne se produit plus lors de la deuxième étape de thermoformage. Compte tenu de l'absence des empreintes sur la matrice de préformage **6,** il n'apparaît pas de dégradations de la matrice de préformage **6.** Cette première étape de thermoformage est mise à profit pour réaliser sur la face de thermoformage **2,** une nervure d'anti-retrait **8** qui d'une part se trouve en appui sur le moule **5** pour limiter l'extension de la pièce **3** et d'autre part, limite le retrait de la pièce **3** lors de la suppression de la force de compression mise en oeuvre pour cette première étape de thermoformage. Cette nervure d'anti-retrait **8** qui s'étend en saillie par rapport à la face de thermoformage **2,** présente de préférence un contour fermé en étant réalisé sur toute la périphérie de la pièce **3.** Bien entendu, il peut être prévu de réaliser plusieurs nervures d'anti-retrait **8** en différents endroits de la pièce **3.**

La nervure d'anti-retrait **8** assume également ces fonctions lors de la deuxième étape de thermoformage même si le déplacement de matière est moins important que dans la première étape de thermoformage. Il est à noter que d'une manière avantageuse, la nervure d'anti-retrait **8** présente une hauteur supérieure à la hauteur maximale des microstructures **1** permettant de protéger ces dernières au cours de l'opération de démoulage.

Par ailleurs, il est à noter qu'il existe une différence de température entre la phase de compression et de démoulage, ce qui entraine un retrait inévitable de la matière par rapport au moule **5.** La rainure **12** réalisée sur la matrice microstructurée **11** permet également de maintenir la pièce en extension pour préserver à la fois les empreintes de la matrice microstructurée **11** et les microstructures **1** réalisées en surface de la pièce **3.**

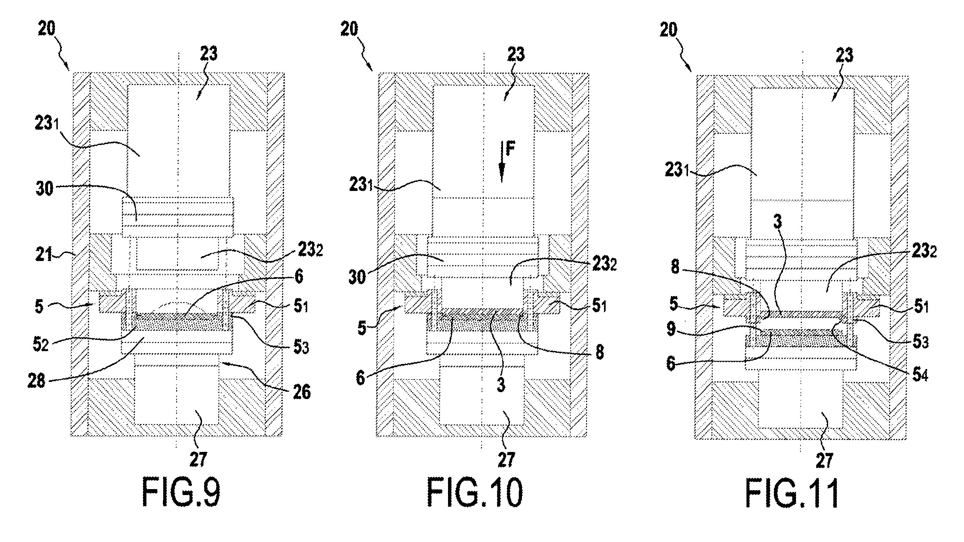

La **Fig. 9** illustre un exemple de réalisation d'une machine **20** permettant de mettre en oeuvre le procédé de micro-thermoformage conforme à l'invention tel que décrit ci-dessus.

Tel que cela ressort de la **Fig. 9****,** la machine de micro-thermoformage **20** comporte un bâti **21** supportant le moule 5 de la pièce **3.** Dans l'exemple illustré, le moule **5** comporte un corps cylindrique **5₁** fermé par une plaque de fermeture **5₂.** Selon une caractéristique avantageuse de réalisation, le moule **5** comporte également un anneau de maintien **5₃** dont la fonction apparaîtra plus précisément dans la suite de la description et qui est interposée entre le corps cylindrique **5₁** et la plaque de fermeture **5₂.** Cet anneau de maintien **5₃** comporte un rebord saillant **5₄** s'étendant en saillie par rapport à la paroi interne du corps cylindrique **5₁.**

La machine **20** comporte également un système **23** d'application de l'effort de compression **F** sur le moule **5,** réalisé par exemple par un vérin **23₁** pourvu d'un piston de compression **23₂** agissant sur la pièce **3** sur une face opposée à la face de thermoformage **2** en contact avec la matrice de préformage **6** ou la matrice microstructurée **11.** A cet égard, la matrice de préformage **6** ou la matrice microstructurée. **11** est portée par la plaque de fermeture **5₂** pour constituer le fond du moule **5.** Avantageusement, chaque matrice **6, 11** vient en butée contre le rebord saillant **5₄** de l'anneau de maintien **5₃.** Par ailleurs, chaque nervure **9, 12** est aménagée respectivement sur la matrice de préformage **6,** et la matrice microstructurée **11** de manière que son bord externe se trouve situé dans l'alignement ou à distance de l'extrémité du rebord saillant **5₄** pour permettre le retrait de la pièce **3** par rapport à l'anneau de maintien **5₃**.

Cette machine **20** comporte également un dispositif **26** permettant de remplacer une matrice par une autre matrice. Dans l'exemple illustré, le dispositif de remplacement **26** comporte un vérin inférieur **27** dont la tige **28** est équipée de la plaque de fermeture **5₂.** Le coulissement en rétraction de la tige de piston **28** permet de dégager la matrice **6, 11** du moule pour permettre son chargement (manuel ou automatique). Le coulissement en extension de la tige de piston **28** permet de fermer le moule **5,** et voire d'assurer l'application de l'effort de compression **F₁** lors de la deuxième étape de thermoformage. Bien entendu, cet effort de compression peut être assuré aussi par le vérin **23₁.**

De manière classique, cette machine **20** comporte également un module **30** de chauffage de la pièce 3. Par exemple, ce module de chauffage **30** permet de chauffer, par tous moyens appropriés, le piston de compression **23₂** et la matrice **6, 11** montée sur la plaque de fermeture **5₂.**

Le fonctionnement de la machine **20** découle directement de la description qui précède.

Après mise en place de la pièce **3** à l'intérieur du moule **5** équipé de la matrice de préformage **6,** le vérin **23₁** est commandé pour mettre sous pression la pièce **3** qui est également soumise à un chauffage **(****Fig. 10****).** Lors de cette première étape de thermoformage **6,** la matrice de préformage **6** réalise, la nervure anti-retrait **8** sur la pièce **3.** Après la suppression de l'effort de compression **F₁** et le refroidissement de la pièce **3,** le moule **5** est ouvert à l'aide du vérin inférieur **27** qui écarte la matrice de préformage **6** du moule **5 (****Fig. 11****)**. Il est à noter que l'anneau de maintien **5₃** grâce à son rebord **5₄** permet de retenir la pièce **3** pendant l'opération de changement de la matrice. La pièce **3** se trouve également en appui sur le corps cylindrique **5₁** et sur le rebord saillant **5₄** par la nervure d'anti-retrait **8.**

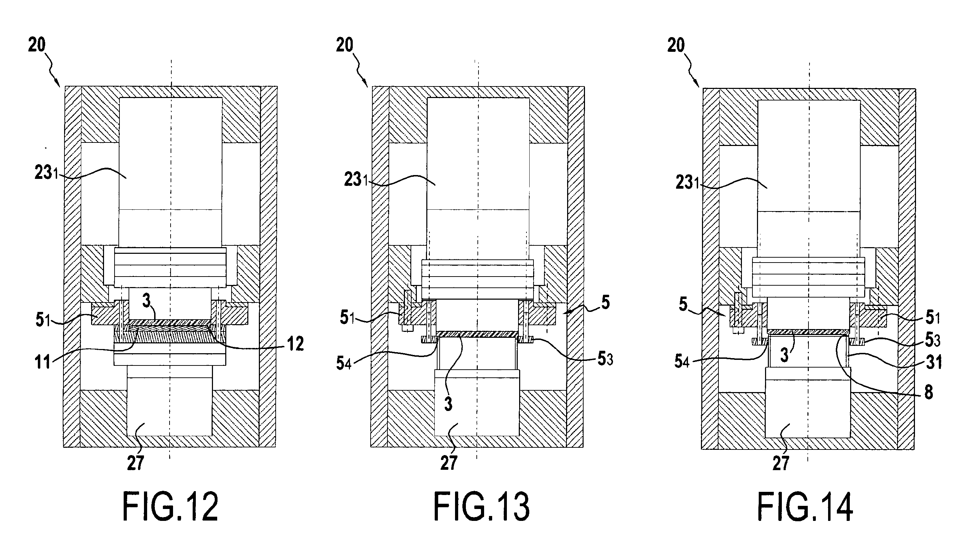

Après le remplacement de la matrice de préformage **6** par la matrice microstructurée **11**, le moule **5** est refermé à l'aide du vérin inférieur **27** en vue de permettre l'accomplissement de la deuxième étape de thermoformage. L'effort de compression pour la formation des microstructures **1** sur la **pièce 3** est alors assuré par le vérin inférieur **27 (****Fig. 12****).** La pièce **3** est soumise également à un chauffage pendant cette opération.

Après refroidissement, le moule **5** est ouvert à l'aide du vérin inférieur **27** qui écarte la plaque de fermeture **5₂** du corps cylindrique **5₁** pour l'enlèvement de la matrice microstructurée **11.** La pièce **3** est supportée par l'anneau de maintien **5₃** qui peut être écarté du moule **5 (****Fig. 13****).** Une pièce de support **31** peut être mise en place sur le vérin inférieur **27** pour venir supporter la pièce **3** et la dégager de l'anneau de maintien **5₃ (****Fig. 13****)** Après le déchargement de la pièce **3,** la machine **20** peut être pilotée pour un nouveau processus de fabrication.

L'objet de l'invention tel que décrit ci-dessus permet de réaliser des pièces **3** de relativement grandes surfaces de l'ordre de 10 à 20 cm de diamètre avec des microstructures **1** présentant des formes très diversifiées et une taille micro ou nanométrique. Cette technique permet d'utiliser une matrice microstruturée **11** avec des empreintes réalisées dans un matériau tendre et donc facile à usiner (tel qu'en polymère). Ces empreintes peuvent présenter un rapport de forme élevé (hauteur / largeur) par exemple de l'ordre de 5 à 10.

La technique décrite ci-dessus permet ainsi la réalisation par exemple des canaux dans un système microfluidique en polymère, de micro-pièces en polymère par fabrication collective puis séparation après moulage, ou de pièces micro-nanostructrées en surface pour des applications optiques.

L'invention n'est pas limitée aux exemples décrits et représentés car diverses modifications peuvent y être apportées sans sortir de son cadre.

## Revendications

1. Procédé de micro-thermoformage pour réaliser des microstructures **(1)** sur la face de formage **(2)** d'une pièce **(3),** à l'aide d'un moule **(5)** comportant une matrice microstructurée **(11) caractérisé en ce qu'**il comprend les étapes suivantes :
- une première étape de thermoformage de la pièce **(3)** placée dans le moule **(5),** réalisée à l'aide d'une matrice de préformage **(6)** ne réalisant pas les microstructures **(1)** mais assurant la formation sur la face de formage, d'au moins une nervure périphérique d'anti-retrait **(8),**
- une étape de remplacement de la matrice de préformage **(6)** par la matrice microstructurée **(11)** avec maintien de la pièce dans le moule **(5),** cette matrice microstructurée **(11)** étant adaptée pour conserver la nervure d'anti-retrait **(8)** lors de l'opération de thermoformage,
- une deuxième étape de thermoformage de la pièce **(3)** maintenue dans le moule **(5)** avec la matrice microstructurée **(11)** pour obtenir la pièce **(3)** avec les microstructures **(1)** et la nervure d'anti-retrait **(8).**

2. Procédé de micro-thermoformage selon la revendication 1, **caractérisé en ce qu'**il consiste à réaliser la nervure périphérique d'anti-retrait **(8)** afin d'être en appui contre le moule **(5).**

3. Procédé de micro-thermoformage selon la revendication 1, **caractérisé en ce qu'**il consiste à réaliser la nervure périphérique d'anti-retrait **(8)** avec une hauteur supérieure à la hauteur des microstructures **(1).**

4. Procédé de micro-thermoformage selon la revendication 1, **caractérisé en ce qu'**il consiste à retirer la matrice microstructurée **(11)** avant l'enlèvement de la pièce **(3)** du moule **(5).**

5. Procédé de micro-thermoformage selon l'une des revendications 1 à 4, **caractérisé en ce qu'**il consiste à refroidir la pièce avant l'enlèvement des matrices **(6, 11).**

6. Machine de micro-thermoformage pour la mise en oeuvre du procédé conforme à l'une des revendications 1 à 5 visant à réaliser des microstructures **(1)** sur la face de thermoformage **(2)** d'une pièce **(3),** comportant :
- un bâti **(21)** porteur d'un moule **(5)** de réception d'une pièce thermoformable **(3),**
- un module **(30)** de chauffage de la pièce,
- un système d'application **(23)** d'un effort de compression **(F)** sur le moule **(5) caractérisé en ce qu'**il comporte :
■ une matrice de préformage **(6)** dépourvue desdites microstructures **(1)** mais pourvue d'au moins une rainure périphérique **(9)** pour former une nervure périphérique d'anti-retrait **(8)** sur la pièce,
■ une matrice microstructurée **(11)** pour réaliser les microstructures **(1)** et comportant une rainure périphérique **(12)** identique à la rainure périphérique **(9),**
■ un dispositif **(26)** de remplacement d'une matrice par une autre matrice,
■ un système **(5₁**, **5₂, 5₃)** assurant, lors de l'opération de remplacement de la matrice de préformage, le maintien de la pièce dans le moule et le contact avec la nervure périphérique de la pièce.

7. Machine de micro-thermoformage selon la revendication 6, **caractérisée en ce que** le dispositif de maintien comporte une plaque de fermeture **(5₂)** du moule **(5),** montée mobile et déplacée par un organe de déplacement **(27),** cette plaque de fermeture **(5₂)** recevant alternativement la matrice de préformage **(6)** et la matrice microstructurée **(11).**

8. Machine de micro-thermoformage selon la revendication 6, **caractérisée en ce que** le système de maintien de la pièce **(3)** comporte un anneau de maintien **(5₃)** présentant un rebord saillant **(5₄)** sur lequel s'appuie la pièce et contre lequel la rainure d'anti-retrait **(8)** est en contact.

## Patentansprüche

1. Mikrothermoformverfahren für die Herstellung von Mikrostrukturen (1) auf der Formungsfläche (2) eines Teils (3) mit Hilfe einer Form (5), die eine mikrostrukturierte Matrize (11) umfasst, **dadurch gekennzeichnet, dass** es die folgenden Schritte umfasst:
- einen ersten Schritt zum Thermoformen des in der Form (5) platzierten Teils (3), der mit Hilfe einer Vorformmatrize (6) durchgeführt wird, die nicht die Mikrostrukturen (1) herstellt, sondern die Ausbildung wenigstens einer umfangseitigen Schrumpfverhinderungsrippe (8) auf der Formungsfläche sicherstellt,
- einen Schritt zum Ersetzen der Vorformmatrize (6) durch die mikrostrukturierte Matrize (11) unter Halten des Teils in der Form (5), wobei diese mikrostrukturierte Matrize (11) geeignet ist, die Schrumpfverhinderungsrippe (8) während des Thermoformvorganges zu bewahren,
- einen zweiten Schritt zum Thermoformen des in der Form (5) gehaltenen Teils (3) mit der mikrostrukturierten Matrize (11), um das Teil (3) mit den Mikrostrukturen (1) und der Schrumpfverhinderungsrippe (8) zu erhalten.

2. Mikrothermoformverfahren nach Anspruch 1, **dadurch gekennzeichnet, dass** es darin besteht, die umfangseitige Schrumpfverhinderungsrippe (8) auszubilden, um an der Form (5) in Anlage zu sein.

3. Mikrothermoformverfahren nach Anspruch 1, **dadurch gekennzeichnet, dass** es darin besteht, die umfangseitige Schrumpfverhinderungsrippe (8) mit einer Höhe, die größer als die Höhe der Mikrostrukturen (1) ist, auszubilden.

4. Mikrothermoformverfahren nach Anspruch 1, **dadurch gekennzeichnet, dass** es darin besteht, die mikrostrukturierte Matrize (11) vor dem Entfernen des Teils (3) aus der Form (5) herauszunehmen.

5. Mikrothermoformverfahren nach einem der Ansprüche 1 bis 4, **dadurch gekennzeichnet, dass** es darin besteht, das Teil vor dem Entfernen der Matrizen (6, 11) abzukühlen.

6. Mikrothermoformmaschine für die Durchführung des Verfahrens nach einem der Ansprüche 1 bis 5, zur Herstellung von Mikrostrukturen (1) auf der Thermoformfläche (2) eines Teils (3), umfassend:
- ein eine Form (5) zur Aufnahme eines thermoformbaren Teils (3) tragendes Gestell (21),
- ein Modul (30) zum Erhitzen des Teils,
- ein System zum Anlegen (23) einer Druckkraft (F) an die Form (5), **dadurch gekennzeichnet, dass** es umfasst:
■ eine Vorformmatrize (6), die nicht die Mikrostrukturen (1) aufweist, aber mit wenigstens einer Umfangsnut (9) versehen ist, um eine umfangseitige Schrumpfverhinderungsrippe (8) an dem Teil auszubilden,
■ eine mikrostrukturierte Matrize (11) für die Ausbildung der Mikrostrukturen (1), die eine mit der Umfangsnut (9) identische Umfangsnut (12) umfasst,
■ eine Vorrichtung (26) zum Ersetzen einer Matrize durch eine andere Matrize,
■ ein System (5₁, 5₂, 5₃), das während des Vorgangs des Ersetzens der Vorformmatrize das Halten des Teils in der Form sowie den Kontakt mit der umfangseitigen Rippe des Teils sicherstellt.

7. Mikrothermoformmaschine nach Anspruch 6, **dadurch gekennzeichnet, dass** die Haltevorrichtung eine Platte zum Schließen (5₂) der Form (5) umfasst, die beweglich angebracht ist und durch ein Bewegungsorgan (27) bewegt wird, wobei diese Schließplatte (5₂) abwechselnd die Vorformmatrize (6) und die mikrostrukturierte Matrize (11) aufnimmt.

8. Mikrothermoformmaschine nach Anspruch 6, **dadurch gekennzeichnet, dass** das System zum Halten des Teils (3) einen Haltering (5₃) umfasst, der einen vorspringenden Rand (5₄) aufweist, an dem sich das Teil abstützt und an dem die Schrumpfverhinderungsrippe (8) in Kontakt ist.

## Claims

1. A micro-thermoforming method for making microstructures (1) on the forming face (2) of a part (3) with the help of a mold (5) having a microstructured die (11), the method being **characterized in that** it comprises the following steps:
- a first step of thermoforming the part (3) placed in the mold (5), which step is performed with the help of a pre-forming die (6) that does not make the microstructures (1), but that serves to form at least one peripheral anti-shrinkage rib (8) on the forming face;
- a step of replacing the pre-forming die (6) with the microstructured die (11) while the part is held in the mold (5), the microstructured die (11) being adapted to conserve the anti-shrinkage rib (8) during the thermoforming operation; and
- a second step of thermoforming the part (3) held in the mold (5), which step is performed by using the microstructured die (11) to obtain the part (3) with the microstructures (1) and the anti-shrinkage rib (8).

2. A micro-thermoforming method according to claim 1, **characterized in that** it consists in making the peripheral anti-shrinkage rib (8) so as to bear against the mold (5).

3. A micro-thermoforming method according to claim 1, **characterized in that** it consists in making the peripheral anti-shrinkage rib (8) with a height that is greater than the height of the microstructures (1).

4. A micro-thermoforming method according to claim 1, **characterized in that** it consists in removing the microstructured die (11) before taking the part (3) out from the mold (5).

5. A micro-thermoforming method according to any one of claims 1 to 4, **characterized in that** it consists in cooling the part before taking out the dies (6, 11).

6. A micro-thermoforming machines for performing the method in accordance with any one of claims 1 to 5 in order to make microstructures (1) on the thermoforming face (2) of a part (3), the machine comprising:
- a support structure (21) currying a mold (5) for receiving a thermoforming part (3);
- a module (30) for heating the part; and
- a system (23) for applying a compression force (F) on the mold (5), the system being **characterized in that** it comprises:
■ a preforming die (6) not having said microstructures (1), but provided with at least one peripheral groove (9) for forming a peripheral anti-shrinkage rib (8) on the part;
• a microstructured die (11) for making the microstructures (1) and including a peripheral groove (12) identical to the peripheral groove (9);
• a device (26) for replacing one die with another die; and
• a holder system (5₁, 5₂, 5₃) acting during the operation of replacing the pre-forming matrix to hold the part in the mold and to maintain contact with the peripheral rib of the part.

7. A micro-thermoforming machine according to claim 6, **characterized in that** the holder system comprises a closure plate (5₂) for the mold (5), the plate being movably mounted and being moved by a movement member (27), the closure plate (5₂) receiving in alternation the pre-forming die (6) and the microstructured die (11).

8. A micro-thermoforming machine according to claim 6, **characterized in that** the holder system for holding the part (3) includes a holder ring (5₃) presenting a projecting a rim (5₄) against which the part is pressed and with which the anti-shrinkage groove (8) is in contact.
